Europäisches Patentamt

European Patent Office

Office européen des brevets

(11) Publication number: **0 421 810 A2**

## EUROPEAN PATENT APPLICATION

(21) Application number: 90310938.7

(51) Int. Cl.⁵: **G02B 5/12, G02F 1/1335**

(22) Date of filing: **05.10.90**

(30) Priority: **05.10.89 GB 8922444**

(43) Date of publication of application:
**10.04.91 Bulletin 91/15**

(84) Designated Contracting States:
**AT BE CH DE DK ES FR GB GR IT LI LU NL SE**

(71) Applicant: **THORN EMI plc**
**4 Tenterden Street**
**London W1A 2AY(GB)**

(72) Inventor: **Rainey, Simon Nicholas**
**13 Maltfield Road**
**Headington, Oxford(GB)**
Inventor: **Shanks, Ian Alexander**
**Flintwood Cottage, Channer Drive**
**Penn, Buckinghamshire, HP10 8HT(GB)**

(74) Representative: **Hurst, Richard Arthur**
**Alexander et al**
**THORN EMI Patents Limited, Central**
**Research Laboratories, Dawley Road**
**Hayes, Middlesex UB3 1HH(GB)**

(54) **A directional reflector.**

(57) A directional reflector includes a faceted sheet of refracting material and a layer of optically absorbing material separated from the refracting material by a substance whose raefractive index is lower than that of the refracting material. This enables either absorption or reflection of incident light, depending upon the angle of incidence.

FIG. 2

# A DIRECTIONAL REFLECTOR

The present invention relates to the provision of a reflector which reflects light in a specular or rectroflective manner, with the intensity of reflected light being dependent on the direction of incident light.

US 4726662 (Cromack) discloses a liquid crystal display including a prismatic lens system or, alternatively, a prismatic reflective system. The liquid crystal material disclosed is an encapsulated operationally nematic liquid crystal material (termed 'NCAP'). In the 'field-on' state, this NCAP material transmits light and so is transparent whereas in the 'field-off' state it scatters light and so appears white or bright. The prismatic lens or reflective system is located on the non-viewing side of the liquid crystal material to enhance the contrast of the display. In a preferred embodiment, each optical prism in a prismatic lens system has an internal light absorbing surface at an angle to the plane of the prismatic lens system. Light incident on the prismatic lens system within a prescribed viewing angle is focussed onto the light absorbing surface. Accordingly, an observer positioned within the prescribed viewing angle will see the display as dark when the liquid crystal material is in transmitting mode and bright when the liquid crystal material is in scattering mode. A backlighting source, which may be a light source per se or a reflector, is provided on the non-viewing side of the prismatic lens system to overcome front surface glare and to enhance the appearance of the display. Alternatively, for a front-lit display, a prismatic reflective system is used in which internal surfaces other than the light absorbing surface are reflective.

It is an object of the present invention to provide an improved directional reflector.

According to the present invention there is provided a directional reflector comprising a sheet of refracting material having a first face and a second face, said first face comprising a plurality of facets, the reflector further comprising an absorbing layer adjacent and separated from one of said first and second faces by a substance having a refractive index lower than the refractive index of the refracting material.

As the absorbing layer is separated from one of the faces of the sheet of refracting material, light passing through the sheet of refracting material and incident on the internal surface of this face can be refracted and absorbed by the absorbing layer or alternatively be reflected, depending on the angle of incidence of the ray of light. Accordingly, the absorbing layer can be positioned to cover the whole of the non-viewing side of the sheet of refracting material, contrary to the teaching of the prior art, with consequent advantage.

Embodiments of the present invention will now be described, by way of example only, and with reference to the accompanying drawings of which:

Figure 1 shows a refracting sheet used in a directional reflector provided in accordance with the present invention;

Figures 2, 3, 4a and 5a show directional reflectors provided in accordance with the present invention;

Figure 4b and 5b are schematic polar diagrams of reflectivity for the directional reflectors of Figures 4a and 5a;

and Figure 6 shows a front-projection system using the directional reflector of Figure 5a.

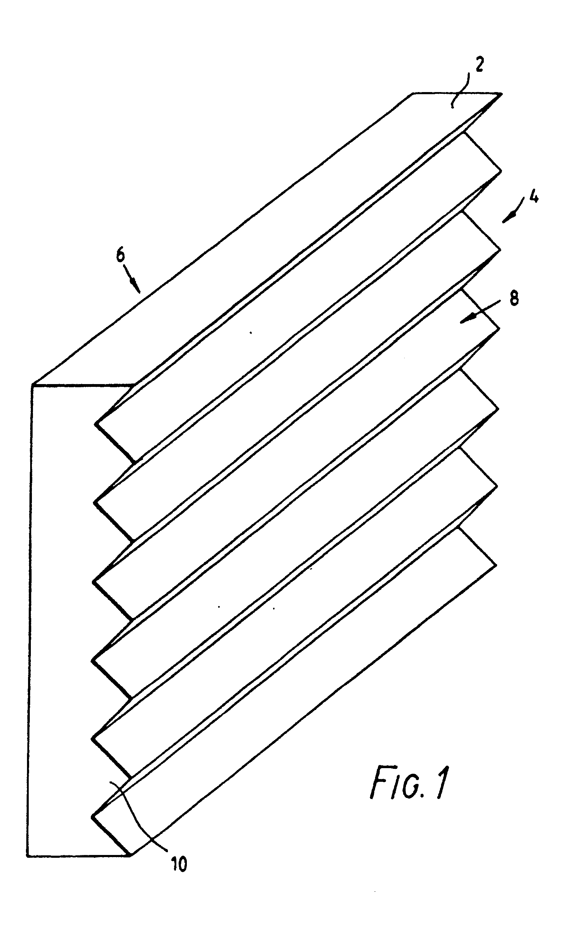

Figure 1 shows a sheet 2 of refracting material such as transparent plastics, having a refractive index Np greater than the refractive index of air, Na. The refracting sheet 2 has two faces 4, 6. One of the faces 4 is formed as a plurality of facets 8 provided by a plurality of parallel and unifom prisms embossed in the face 4. The other face 6 is planar. A ray 10 of light incident on an external surface of the refracting sheet 2 is primarily refracted, though some surface reflection does occur. A ray of light incident on an internal surface of the refracting sheet 2 can be refracted or can be totally reflected depending on its angle of incidence. Total reflection occurs if the angle of incidence $\theta$ is equal to or greater than the critical angle $\theta_c$ of the material where

$$\sin \theta_c = \frac{Na}{Np}$$

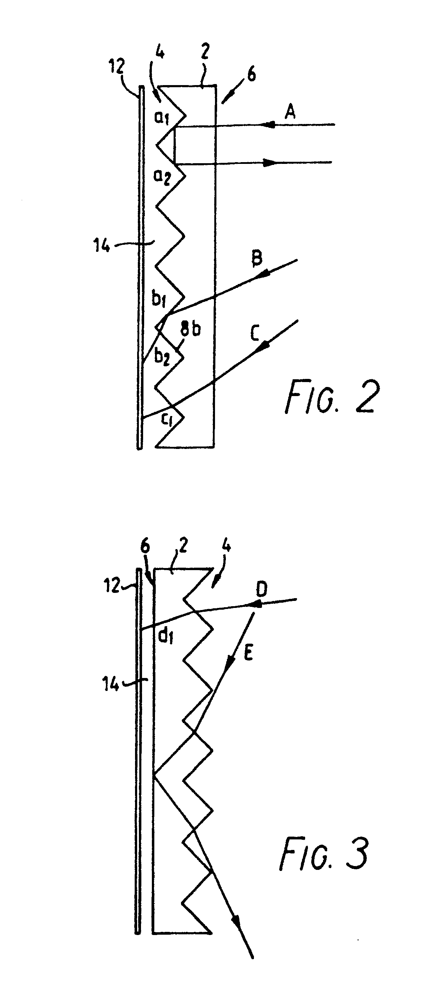

A directional reflector, as shown in Figures 2 and 3, comprises a refracting sheet 2 and a layer 12 of absorbing material. In Figure 2, the absorbing layer 12 is adjacent the facetted face 4 of the refracting sheet 2, and separated therefrom by an air gap 14. The effect of the directional reflector on light incident thereon is determined by the angle of incidence of the rays of light and the dimensions of the refracting sheet 2. The ray A has an angle of incidence to the face 6 such that it is totally internally reflected at points $a_1$ and $a_2$ and so is reflected from the directional reflector as a whole. Ray B is reflected at point $b_1$ but its angle of incidence at the facet 8b is less than the critical angle for the refracting material and so it is refracted at point $b_2$ rather than reflected and is accordingly absorbed by the absorbing layer 12. The angle of incidence of ray C at point $c_1$ is less than the critical angle for the refracting material and so this ray is refracted at point $c_1$ rather than reflected and is accordingly absorbed by the absorbing layer 12. Thus, a range of angles of incidence of light rays on the face 6 can be determined for which the light is reflected by the directional reflector, light rays of angle of incidence outside this predetermined range being absorbed. Correspondingly, an observer positioned to view the directional reflector within the predetermined range will see a reflection whereas an observer positioned to view the directional reflector outside the predetermined range will see a black sheet.

In a specific embodiment of the directional reflector of Figure 2, the sheet 2 of refracting material has a refractive index Np of 1.5. As the refractive index of air is 1, the critical angle $\theta_c$ for the refracting material is 42°. The cross-section of the prisms 10 is a right-angled isosceles triangle and so the angle of each facet 8 to a normal to the planar face 6 is 45°, Accordingly, it can be determined, from a consideration of the optical geometry, that the range of angles of incidence on the planar face 6 of light which is reflected from the directional reflector is about 4.5° either sense of a normal to the planar face 6.

Figure 3 shows a directional reflector in which the absorbing layer 12 is adjacent the planar face 6 of the refracting sheet 2 and separated therefrom by an air gap 14. As with the directional reflector shown in Figure 2, the effect of the directional reflector of Figure 3 on light incident thereon is determined by the angle of incidence of the rays of light and the dimensions of the refracting sheet. The ray D has an angle of incidence to the face 4 such that its angle of incidence at point $d_1$ on the internal surface of the face 6 is less than the critical angle of incidence for the refracting material. Ray D is accordingly refracted rather than reflected at point $d_1$ and so absorbed by the absorbing layer 12. Ray E however has an angle of incidence at the face 6 greater than the critical angle for the refracting material and so is reflected from the directional reflector. Thus, light incident on the directional reflector within a predetermined range of angles will be absorbed and the sheet will appear black whereas light incident on the directional reflector at an angle outside this range of angles will be reflected.

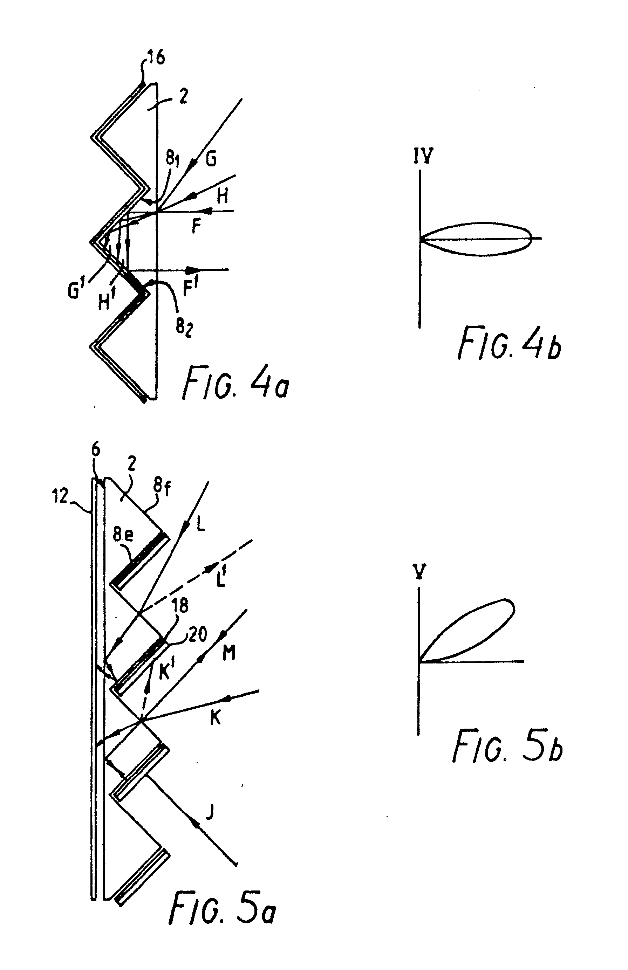

In a modification to the embodiment of Figure 2, the absorbing layer 16 is corrugated as shown in Figure 4a. Ray F is internally reflected at two of the facets and so reflected as $F^1$ from the directional reflector as a whole. Rays G and H are reflected at the facet $8_1$ but refracted at the facet $8_2$ and so absorbed by the absorbing layer 16. Figure 4b is a schematic polar diagram of reflectivity of the directional reflector of Figure 4a with the axis IV corresponding to the plane of the directional reflector. An advantage of the corrugated absorbing layer 16 over the absorbing layer 12 of Figure 2 is that it prevents distortion of an image projected onto the directional reflector due to multiple refraction at a number of facets of the refracting sheet and consequent reflection towards an observer from a facet distant from the original facet of incidence.

Figure 5a shows modifications to the directional reflector of Figure 3. Means for enhancing the reflectivity into the refracting sheet 2, comprising a reflective layer 18, are provided at alternate facets 8e of the refracting sheet 2. An absorbing layer 20 is provided on the outer surface of each reflective layer 18. The effect of these layers 18, 20 on the directional reflectivity of the embodiment can be seen from the Figure and is shown in Figure 5b which is a schematic polar diagram of reflectivity for the directional reflector of Figure 5a with the axis V corresponding to the plane of the directional reflector.

Ray J is incident on the directional reflector at an angle such that it is incident on an absorbing layer 20 and so is absorbed without having passed through the directional reflector. The angle of incidence of ray K is such that the ray is refracted at both a facet 8f and at the back face 6 and so absorbed at the absorbing layer 12. Any surface reflected ray $K^1$ of the ray K is absorbed at the adjacent absorbing layer 20. The angle of incidence of ray L is such that in the Figure 3 embodiment it would have appeared reflected. In the Figure 5a embodiment, however, the ray L is reflected by the reflective layer 18 and so incident on the planar face 6 at an angle less than the critical angle of the refracting material. Thus the ray L is refracted at the planar face 6 and absorbed by the absorbing layer 12. Figure 5a also shows a surface reflected ray $L^1$ from the ray L but this ray $L^1$ is highly attenuated because of the angle of incidence of the ray L at the facet 8f. Thus the only ray shown that is reflected by the directional reflector is the ray M and this ray M is reflected back substantially in the direction from where it came.

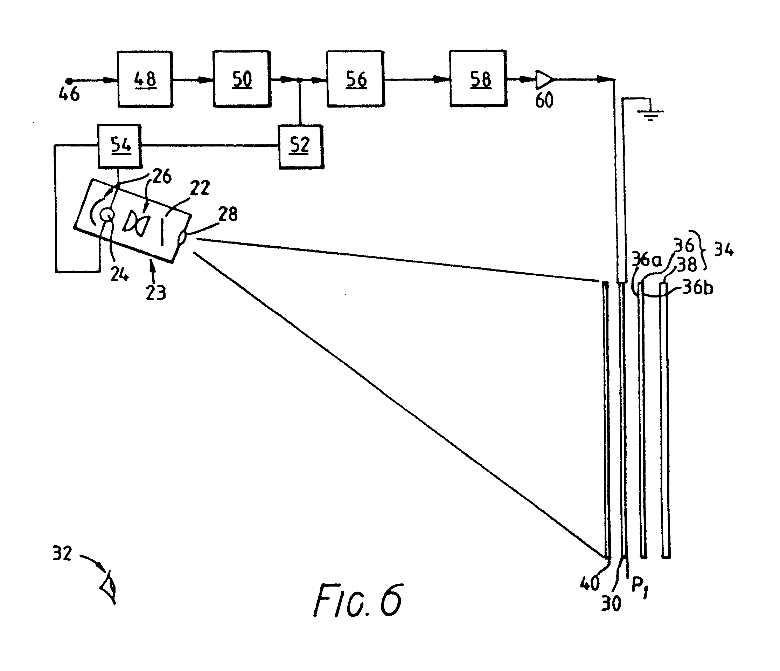

Figure 6 shows a front-projection system using a directional reflector provided in accordance with the present invention and as shown in Figure 5a.

A source picture 22, such as a conventional liquid crystal display (LCD) (e.g. an active matrix, a multiplexed twisted nematic or a ferroelectric colour television LCD), a photographic transparency, or a movie film frame, is projected from a projector 23 using a Xenon strobe lamp 24, or another source of light whose intensity can be varied. The projector is otherwise of a conventional type or may be a lensless shadow projector, e.g. of the Linnebach type (i.e. using a 'point' source to project an enlarged colour shadow image onto a ' screen).

The lamp 24 is flashed at a given frequency, typically of 50Hz with each flash lasting for an interval in the range of from of the order of 1 microsecond to a few milliseconds. In order to produce an image which appears continuous, i.e. with no flicker, the given frequency has to be equal to or greater than a critical fusion frequency, which is affected by both the luminance and the size of the image. The luminance of a continuous image so produced is equal to the average luminance of the flashing image.

The light from the flashing lamp 24 is projected via an optical collimation system 26 and a projection lens 28 and focussed onto a plane $P_1$ in which is situated means 30 for modulating light. The modulating means 30 provides a defined surface and is operable between a first mode and a second mode, operation being synchronised with the variation of light intensity so that more light is emitted to project the image onto the plane when the modulating means 30 is in the first mode.

The modulating means 30 comprises an electro-optic layer containing a liquid crystal, e.g. a cholesteric to nematic phase change cell, or preferably a sheet of plastics material which contains microencapsulated droplets of a nematic liquid crystal material. On either side of the sheet is laminated a plastic foil with transparent indium tin oxide electrodes on its surface. This forms a large area, e.g. 1m x 3m, electro-optic shutter which goes from translucent to transparent when a potential difference is applied. Accordingly, the material can be rapidly switched (with a response time of about 1ms to 5ms) electrically between a first mode in which the modulating means 10 is translucent and a second mode in which tbe modulating means is transparent.

The modulating means 30 in the first mode forms a translucent screen from which an image is reflected to be directly observed by an observer (indicated at 32) on the same side of the modulating means as the projector 23 (i.e. front-projection). In the second mode, the modulating means 30 is transparent and so no or little light can be diffusely reflected from the plane $P_1$ to the observer. In this way, the effect produced from ambient light incident on the defined surface of the modulating means is reduced.

A directional reflector 34 comprising a refracting sheet 36 and an absorbing layer 38 is provided behind the modulating means 30. Face 36a of the refracting sheet 36 is a facetted face with reflective and absorbing layers as shown in Figure 5a. (The facets and layers have not been shown in Figure 6 for clarity) Face 36b is a planar face. The directional reflector reflects light incident thereon within a predetermined range of angles but absorbs light incident thereon outside the predetermined range of angles. The projector 23 is positioned to project light onto the modulating means 30 and the directional reflector 34 at angles within the predetermined range of angles while the observer 32 is positioned to view the modulating means 30 outside the predetermined range of angles. Thus when the modulating means 30 is in the first (scattering) mode, the image reflected from the modulating means 30 is enhanced by light from the directional reflector which can be scattered by the modulating means 30 towards the observer 32 whereas when the modulating means 30 is in the second (transparent) mode, light incident on the directional reflector is either absorbed or reflected away from the observer 32. An anti-reflection film 42 in front of the modulating means reduces reflection of ambient light incident on the front surfaces of the modulating means 30. Thus the flashing image is maximally directed to the eye of the observer 32 when the modulating means 30 is in the first mode, whereas any ambient light is attenuated during intervals between the flashes. Accordingly, the contrast between the projected image and the noise produced by scattered ambient light from a second source of light is improved.

Thus, a projected image of the same contrast as prior art projected images can be produced by the method of the present invention using a light source of lower average power, or alternatively a projected image of better contrast can be produced using a light source of the same average power.

Figure 6 also shows schematically the electrical circuitry used in the method. Waveforms generated from a source 46, optionally modified by means 48, control a pulse generator 50. The source 46 could be a 50Hz AC mains supply or the field synchronisation pulses from a television, e.g. an LCD TV at 22, with the generated waveforms being modified by means 48 such as a full-wave rectifier and comparator. Alternatively, the source 46 could be a photodetector which measures pulsatile ambient light, the photodetector being connected to the input of means 48 such as a comparator which triggers the lamp 24 and the modulating means 30 when the ambient light is at a minimum intensity.

The source 46 and pulse generator 50 are common to both the circuit for powering the lamp 24 and the circuit for switching the modulating means 30 and synchronise the flashing of the lamp 24 and the switching of the modulating means 30. The circuit for the lamp 24 further comprises a pulse delay unit 52 and the flash lamp drive electronics 54, e.g. a standard drive unit for a strobe lamp. The circuit to switch the modulating means further comprises a pulse delay unit 56, a drive waveform generator 58 (e.g. an arbitrary waveform generator manufactured by Wavetech Ltd.) and an amplifier 60 to apply a potential difference to the electrodes of the modulating means 30. The pulse delay units 52, 56 so affect the pulses applied to flash the lamp 24 and switch the modulating means 30 that a zero or low potential difference is applied to switch the modulating means 30 to the first mode, translucent, when power is supplied to flash the lamp 24 and a potential difference of e.g. 60V rms is applied, allowing the modulating means 30 to switch to the second mode, transparent, when no power is supplied to the lamp 24.

It is further envisaged that a directional reflector according to the present invention can be used with a front-lit liquid crystal display.

**Claims**

1. A directional reflector comprising a sheet of refracting material having a first face and a second face, said first face comprising a plurality of facets, the reflector further comprising an absorbing layer adjacent and separated from one of said first and second faces by a substance having a refractive index lower than the refractive index of the refracting material.

2. A reflector according to Claim 1 wherein the plurality of facets are provided by a plurality of parallel and uniform prisms.

3. A reflector according to Claims 1 or 2 wherein each facet is at an angle to the normal to said second face.

4. A reflector according to any one of the preceding claims wherein the absorbing layer is adjacent said second face.

5. A reflector according to Claim 4 further comprising means for enhancing the reflectivity into the sheet of alternate facets.

6. A reflector according to Claim 5 further comprising an absorbing layer on the outer surface of each of the reflecting means.

7. A reflector according to any one of Claims 1 to 3 wherein the absorbing layer is adjacent and follows the contour of said first face.

8. A directional reflector substantially as hereinbefore described with reference to and as illustrated in any one of the accompanying drawings.

9. A screen comprising a directional reflector according to any one of the preceding claims and a layer of liquid crystal material, the liquid crystal layer being adjacent the opposite face of said sheet from the absorbing layer.

10. A display comprising a directional reflector according to any one of the preceding claims and a matrix of liquid crystal pixels, the liquid crystal pixels being adjacent the opposite face of said sheet from the absorbing layer.

FIG. 1

FIG. 2

FIG. 3

FIG. 4a

FIG. 4b

FIG. 5a

FIG. 5b

FIG. 6

EP 0 421 810 A2